# EUROPÄISCHE PATENTSCHRIFT

(11) **EP 3 840 931 B1**
(45) Veröffentlichungstag und Bekanntmachung des Hinweises auf die Patenterteilung: **12.02.2025**
(21) Anmeldenummer: 19801477.1
(22) Anmeldetag: 23.08.2019
(51) Int. Cl.: B29C 64/106, B29C 64/227, B29C 64/393, B33Y 10/00, B33Y 30/00, B33Y 50/02, B25J 9/00

(54) **SEILROBOTER-3D-DRUCKER UND VERFAHREN ZUR LAGEERFASSUNG UND ZUR LAGEÄNDERUNG DES DRUCKKOPFES EINES SEILROBOTER-3D-DRUCKERS**
CABLE ROBOT 3D PRINTER AND METHOD FOR DETECTING THE POSITION AND FOR CHANGING THE POSITION OF THE PRINT HEAD OF A CABLE ROBOT 3D PRINTER
IMPRIMANTE 3D À ROBOT À CÂBLES ET PROCÉDÉ DE DÉTECTION ET DE MODIFICATION DE LA POSITION DE LA TÊTE D'IMPRESSION D'UNE IMPRIMANTE 3D À ROBOT À CÂBLES

(30) Priorität: 23.08.2018 DE 102018120662
(43) Veröffentlichungstag der Anmeldung: 30.06.2021
(73) Patentinhaber: Niederberger, Anton, 6370 Oberdorf NW (CH)
(72) Erfinder: Niederberger, Anton, 6370 Oberdorf NW (CH)
(74) Vertreter: Schied, Sebastian
(86) Internationale Anmeldenummer: PCT/EP2019/072653
(87) Internationale Veröffentlichungsnummer: WO 2020/039098

(56) Entgegenhaltungen:
- WO-A1-2017/174201
- DE-A1- 102014 015 335
- US-A1- 2009 066 100
- TORU MAKINO ET AL: "Cable collision avoidance of a pulley embedded cable-driven parallel robot by kinematic redundancy", CONTROL, MECHATRONICS AND AUTOMATION, ACM, 2 PENN PLAZA, SUITE 701 NEW YORK NY 10121-0701 USA, 7 December 2016 (2016-12-07), pages 117 - 120, XP058326676, ISBN: 978-1-4503-5213-0, DOI: 10.1145/3029610.3029620

## Beschreibung

Seilroboter-3D-Drucker insbesondere für den Druck sensibler Objekte, wie beispielsweise Prothesen und zur Herstellung von Knochenersatz oder zum Drucken von Biomaterial oder Organen.

Der 3D-Druck wird in der Industrie bereits seit einiger Zeit in verschiedenen Bereichen erfolgreich eingesetzt. So lassen sich geometrisch anspruchsvolle Objekte, die früher unter hohem Materialverbrauch mithilfe formgebender oder subtraktiver Werkzeuge produziert werden mussten, heutzutage computergestützt designen und additiv, also praktisch ohne Materialverlust herstellen.

Bisher wird in der Regel zunächst versucht, Defekte, die sich nach Traumata oder Operationen ergeben, durch ein sogenanntes Autograft zu ersetzen, also durch Knochen, die dem Patienten aus anderen Stellen des Skeletts entnommen wurden. Die Herstellung von Knochenersatz ist sehr kompliziert und risikobehaftet. Die Nachteile dieses Verfahrens liegen auf der Hand: Einerseits verfügt der Mensch nur über eine begrenzte Menge an auf diese Weise verwertbarem Knochenmaterial, und andererseits sind die Ergebnisse nicht immer funktionell exakt oder wie im Falle der Kiefer- und Gesichtschirurgie häufig kosmetisch nicht befriedigend.

So sind bereits 3D-Drucker und Seilroboter bekannt, welche einerseits das herzustellende Objekt in Schichten unterteilt und anderseits aufwändige Seilumkehrungen und damit größere Seillängen aufweisen, welche einen individuellen und genauen 3D-Druck nicht ermöglichen.

So offenbart die DE 10 2014 015 335 A1 eine generative Fertigungsvorrichtung zum schichtweisen Aufbau von Bauwerken, die einen Ausgabekopf hat, der zumindest eine Ausgabedüse für aushärtbares Ausgangsmaterial aufweist. Der Ausgabekopf ist fluidisch mit einer Ausgangsmaterialquelle verbunden, wobei eine Antriebsvorrichtung für den Ausgabekopf vorhanden ist, um die Ausgabedüse des Ausgabekopfs innerhalb eines vorbestimmten Arbeitsraumes zu vorbestimmten Soll-Positionen zu bewegen, wobei es sich bei der Antriebsvorrichtung um einen Seilroboter handelt.

Weiterhin offenbaren Toru Makino und Takashi Harada in "Cable collision avoidance of a pulley embedded cable-driven parallel robot by kinematic redundancy" (http://dx.doi.org/10.1145/3029610.3029620) einen neuartigen parallelen Roboter mit acht redundanten Kabelantrieben, um Kollisionen zwischen den Kabeln zu vermeiden.

Aufgabe der Erfindung ist es, einen 3D-Drucker zu schaffen, um beispielsweise Knochenersatz oder Organersatz oder andere Gegenstände wie Prothesen aus biokompatiblen Stoffen herzustellen.

Die Aufgabe wird durch einen Seilroboter-3D-Drucker mit den Merkmalen gemäß des unabhängigen Anspruches 1 gelöst. Weiterbildungen sind in den jeweiligen dazu abhängigen Ansprüchen angegeben.

Die Befestigung des ersten Endes der Seile oder Bänder an dem Druckkopf ist lösbar, was beispielsweise zu Wartungs- oder Reparaturzwecken vorteilhaft Dieser Seilroboter-3D-Drucker ist in der Lage, beispielsweise für Biomaterial millimetergenaue bzw. hochpräzise Knochenreplikationen aus organischem Biomaterial zu produzieren. Mit den acht Seilen, an welchem der Druckkopf aufgehängt ist, ist der Druckkopf in sechs Achsen frei und hochpräzise im Arbeitsraum beweg- und schwenkbar. Die acht Seile werden alle separat über jeweils einen Getriebemotor angesteuert.

Der Druckprozess verläuft genuin, also ursprünglich oder dem Original folgend dreidimensional, anders als bei den bisherigen auf dem Markt erhältlichen Systemen, bei denen das herzustellende Objekt in Schichten unterteilt und dann schichtweise materialisiert wird. Als Vorlage für das zu replizierende Knochenteil dient beispielsweise ein individueller computertomographischer Scan direkt vom Patient. Der Druckkopf lässt sich auch schräg und verdreht positionieren.

Mit dem Seilroboter-3D-Drucker lassen sich komplizierte Geometrien maßgeschneidert auf den Patienten ohne Materialverlust und ohne Erfordernis einer Gussform herzustellen. Das Material wird im Druckprozess als poröse Struktur synthetisiert. Dabei wird wie bei beispielsweise Knochen gegeben eine sogenannte schwammartig erscheinende Struktur bzw. eine netzartige Knochenbälkchenstruktur nachgebildet bzw. gedruckt. Nach einer Transplantation verbindet sich nun das umliegende Gewebe mit dem künstlichen Knochen, dabei werden die Zwischenräume des porösen Gewebes von Blutgefäßen durchdrungen und mit Zellen gefüllt, sodass sich nach dem Abbauen oder der Annahme des organischen Kunststoffs oder Materials, wie beispielswiese natürliches Calcium ein körpereigener Knochen bilden kann. Es liegt auf der Hand, dass das natürliche Calcium ein entsprechendes Bindemittel enthalten kann, sofern dies erforderlich wird, die gegebenenfalls notwendige Stabilität und Struktur zu erhalten.

Durch das gedruckte Biomaterial erübrigt sich die wie bisher übliche Entnahme von Körpereigenem Knochenmaterial. Auch mögliche Abstoßungsreaktionen des Körpers auf die implantierten Fremdkörper werden weitgehend vermieden.

Zur Verstärkung der zu druckenden Struktur lassen sich während des Druckens Titan-Stäbe einarbeiten, damit der Knochenersatz bzw. die Knochenreplikationen direkt nach dem Einsetzen oder der Knochenersatz bzw. die Knochenreplikationen an stark beanspruchten Stellen voll belastbar sind. Am Druckkopf kann dafür zumindest eine mechanische Greifvorrichtung vorgesehen sein.

Andere Hilfsmittel können ebenfalls vorgesehen werden.

Im Bedarfsfalle beseitigt ein Fräs-Werkzeug die störende Oberflächenstruktur des 3D-Drucks. Damit wird beim Druckobjekt also der Knochenersatz bzw. die Knochenreplikation die glatte Form der jeweiligen digitalen Vorlage erreicht. Weiterhin können bei Bedarf mittels des entsprechenden Fräs-Werkzeugs nachträglich Bearbeitungen, wie Löcher, Nuten etc. in die fertige Oberflächenstruktur des 3D-Druckobjekts erfolgen, damit das Druckobjekt bei einer späteren Verschraubung oder Montage eines Gelenks bereits die dafür notwendigen Anschlüsse vorweist.

Für einen reibungslosen Ablauf innerhalb der Chirurgie lässt sich, nachdem ein Druckvorgang abgeschlossen wurde, das System anders als die mit deutlich mehr mechanischen Teilen arbeitenden herkömmlichen 3D-Drucker leicht demontieren und zusammen mit dem übrigen Operationsbesteck in den bereits in den chirurgischen Abteilungen existierenden Desinfektionsanlagen sterilisieren, sodass für den nächsten Druckprozess eine vollkommen keimfreie Apparatur zur Verfügung steht.

Das Druckobjekt entsteht in einem vollständig abgekapselten Arbeitsraum. Der Arbeitsraum ist entsprechend abtrennbar oder verschließbar und steril. So werden Einflüsse der Umgebung, wie Staub, Schmutz, Bakterien, vermieden. Dieser kann unter Vakuum, Überdruck und oder Schutzgasatmosphäre gesetzt werden, um Reaktionen des Biomaterials mit der Umgebungsluft zu vermeiden. Zudem kann der Arbeitsraum geheizt werden. Durch Sichtfenster kann der Druckprozess beobachtet werden.

Der 3D-Drucker für Biomaterial verwendet das Prinzip des Seilroboters für die Positionierung des Druckkopfes, wobei acht Seile oder Bänder zum Einsatz kommen, um den Manipulator in allen sechs Freiheitsgraden zu positionieren und zu belasten. Auf dem Druckkopf können bis zu zwei zusätzliche Rotationsachsen angebracht werden, wenn die Beweglichkeit in den rotativen Freiheitsgraden, also den Freiheitsgraden der Rotation durch den Seilroboter allein nicht ausreicht.

Der Arbeitsraum ist beispielsweise würfelförmig oder quaderförmig. Die Seiltrommeln können - im Bereich der Ecken des würfelförmigen oder quaderförmigen Arbeitsraumes angeordnet sein. Entsprechend bilden durch die Positionen der Seilaustritte als Seilaustrittspunkte der Seiltrommeln, die Seiltrommeln wie auch der Arbeitsraum einen Quader oder einen Würfel bzw. die räumlichen Ausdehnungen eines Quaders oder eines Würfels.

Seiltrommeln können jeweils im Boden sowie in der Decke des Arbeitsraumes im Bereich der Ecken montiert sein. Ebenso können die jeweiligen Seiltrommeln in oder an den Seitenwänden des Arbeitsraumes im Bereich der Ecken montiert sein. Auch Mischformen sind möglich.

Der Druckkopf bzw. dessen Rahmen umfasst beispielsweise acht sphärische Seil- oder Bandaufhängungen, eine Düse und ein Ventil. Mit einer Pumpe wird das flüssige oder zähflüssige Polymer oder zu druckende Material für den 3D-Druck zum Druckkopf gefördert und dosiert. Die Zuführung des Druckmaterials zum Druckkopf erfolgt durch einen flexiblen Spiralschlauch oder ein Behälter auf dem Druckkopf wird direkt mit dem Druckmaterial befüllt. Die Energiezuführung erfolgt ebenfalls durch ein Spiralkabel oder entlang der Materialzufuhr oder auf dem Druckkopf befindet sich ein Akku. Die Signalübertragung findet ebenfalls über Spiralkabel oder über Funk statt.

Der Druckkopf kann an oder in einem an sich flachen oder ebenen quadratischen oder rechteckigen oder runden Rahmen oder einem an sich räumlichen würfelförmigen Rahmen oder queraderförmigen Rahmen oder einem tetraederförmigen Rahmen angeordnet sein.

Druckkopf und Rahmen können auch als ein Bauteil oder ein kombiniertes Bauteil ausgeführt sein.

Das erste Ende der jeweiligen Seile oder Bänder kann an dem Rahmen mit einer Seilbefestigung oder Bandbefestigung schwimmend oder beweglich befestigt sein.

Die Befestigung kann, beispielsweise für Wartungszwecke auch lösbar ausgeführt sein. Die Seilbefestigung oder Bandbefestigung entspricht dem Seilendpunkt am Rahmen bzw. am Druckkopf bzw. wird diesem in der Betrachtung gleichgesetzt.

Die Positionen der Befestigungen der Seile oder Bänder als Seilbefestigung oder Bandbefestigung am Druckkopf können am oben dargestellten Rahmen angeordnet sein, welcher den Druckkopf zumindest an dessen Kanten umgibt oder ihn trägt. Entsprechend kann ein oder sind zwei der ersten Enden des oder der Seile oder Bänder an einem Punkt zusammengeführt sein. In allen Varianten des Rahmens können die Punkte der Seilbefestigung oder Bandbefestigung am Druckkopf gegenüber dem Arbeitsraum in der Neutralposition parallel oder um 45 Grad gedreht sein. Für die verschiedenen Varianten kommen mehrere bzw. unterschiedliche Seilanordnungen in Betracht.

Dem entsprechend ist ein Seil oder Band von den jeweiligen Seiltrommeln oben und unten jeweils einzeln oder paarweise an eine Ecke des Rahmens geführt.

Alternativ sind die Seile oder Bänder aus jeweils den Seiltrommeln benachbarter Ecken einer den Arbeitsraum begrenzenden Seitenfläche oder einer Kante unten oder oben, aus den einer der den Arbeitsraum begrenzenden Seitenflächen diagonal gegenüberliegenden Ecken, aus den im Arbeitsraum diagonal gegenüberliegenden Ecken jeweils einzeln oder paarweise an eine Ecke des Rahmens oder Druckkopfes und/oder jeweils einzeln oder paarweise an benachbarte oder diagonal gegenüberliegende Ecken des Rahmens oder Druckkopfes geführt. Hierdurch können die Kräfte als Reaktion in allen drei Translationsachsen und den dazu gehörenden Rotationsachsen aufgenommen werden. Kreuzen sich die Seile oder Bänder in allen drei Globalachsen so ergibt sich eine höhere Stabilität. Das Kräfteverhältnis verbessert sich wegen des größeren Hebels. Die Länge des Hebels ist um die Höhe des Druckkopfes bzw. dessen Rahmens grösser.

Innerhalb des Arbeitsraumes bzw. Druckraums befinden sich beispielsweise in den Ecken die jeweiligen Seiltrommeln. Das Seil ist in der jeweiligen Seiltrommel planar, also senkrecht zur Rotationsachse der Seiltrommel gewickelt, damit das Seil sich beim Wickeln in oder auf der Seiltrommel nicht überkreuzt. So ist die jeweilige Seillänge über die Trommeldrehung und die jeweilige Seilkraft über das jeweilige Drehmoment immer eindeutig definiert. Die jeweilige Seiltrommel kann zweiteilig sein und kann so für die Sterilisation sehr einfach demontiert werden.

Weiterhin können die jeweiligen Seiltrommeln um die Schneckenwelle schwenkbar sein und folgen damit jeweils spannungsfrei den Bewegungen und Richtungen der Seile oder Bänder, welche sich durch die unterschiedlichen Lagen des Druckkopfes und damit durch die unterschiedlichen Seil- oder Bandlängen und Seil- oder Bandrichtungen ergeben. Zudem kann damit der Druckkopf in alle Ecken des Arbeitsraumes gelangen. Die Schwenkbewegung der Seiltrommel ist nicht angetrieben, sondern richtet sich durch die Seilspannung selbst nach dem Druckkopf aus.

Die acht jeweiligen Antriebe der Schneckenwelle können sich je Anwendungsgebiet aus hygienischen Gründen außerhalb des Arbeitsraumes befinden. Das Drehmoment kann über eine Welle oder über eine berührungslose Magnetkupplung in den Arbeitsraum übertragen werden.

Je nach Art des Antriebs kann die jeweilige Schneckenwelle damit durch eine Dichtung aus dem Arbeitsraum zum Antrieb geführt oder mittels einer Kupplung mit dem Antrieb gekoppelt oder wirkverbunden sein. Im ersten Fall wird der Arbeitsraum beim Eintrittsort der rotierenden Welle beispielsweise mit einem Radialwellendichtring abgedichtet. Die Antriebe können bei keinen oder weniger strengen hygienischen Auflagen auch innerhalb des Arbeitsraumes angeordnet und mit der Schneckenwelle gekoppelt oder wirkverbunden sein.

Der Regelkreis hat die Aufgabe, die aus den programmierten Vorgaben (G-Code), also den x, y und z- Koordinaten interpolierte und sich ständig ändernde Sollposition des Druckkopfes möglichst genau zu verfolgen. Der Regelkreis enthält die digitalen Funktionsblöcke Geometrie-Modell, Seilkraftsteuerung, Positionsermittlung, Positionsregelung, Linearisierung sowie einen adaptiven LQ-Regler, auch bekannt als linear-quadratischer Regler.

Für zumindest die Positionsermittlung bzw. Positionsregelung bzw. zur Fehlerminimierung, wird zunächst im Arbeitsraum ein definierter Normquader höchster Oberflächenqualität und Maßgenauigkeit platziert und es werden als adaptives Abtasten sich mehrfach wiederholend alle möglichen Koordinaten oder Punkte, insbesondere die Kontur bzw. Oberfläche des Quaders sowie die Extrem- oder Begrenzungskoordinaten des Arbeitsraumes mehrfach bzw. mehren Durchläufen abgefahren (getastet) bzw. eingelesen. Dabei werden beliebige Punkte beliebig oft hochgenau gemessen. Die Messreihen mit Ihren Abweichungen werden unter Berücksichtigung aller beeinflussenden Faktoren wie die individuelle Seilcharakteristik erfasst. Auftretende Abweichungen werden ausgeglichen bzw. korrigiert. Durch die Wiederholungen lernt das System selbstständig auftretende Abweichungen auszugleichen bzw. korrigieren, da kontinuierlich abwechselnd gemessen und korrigiert wird.

Weiterhin wird in einer davon unabhängigen Messung der Arbeitsraum kontinuierlich ausgemessen. Die dabei entstehenden Ergebnisse der Messreihen werden gemittelt. Damit können zu jederzeit der Einfluss von Bauteil- oder Komponentencharakteristiken miterfasst und berücksichtigt werden.

Die jeweiligen Messergebnisse lassen sich nun für eine hochgenaue Positionierung kombinieren, so dass in jeder Position trotz bestehender Abhängigkeiten von Bauteilen oder Komponenten genau angesteuert werden kann.

Dabei gibt es Bereiche, welche eine nur geringe Rechenleistung bzw. Performance zur Positionsermittlung bzw. Positionsregelung erfordern als andere Bereiche im Arbeitsraum.

Die Messgrößen für den Regelkreis sind die acht Seillängen, welche über Encoder an den Antrieben ermittelt werden.

Zusätzlich können ein Inertialsystem aus Beschleunigungssensoren und Gyroskopen, ein zweiachsiges Schwerkraftpendel, Signaltransmitter, vorzugweise am Druckkopf oder des Rahmens zur Laufzeitmessung oder Digitalkameras, die statisch angeordnet sind, eingesetzt werden, um die Messgenauigkeit zu erhöhen. Die Stellgrößen des Regelkreises sind die Seilkräfte, respektive die Drehmomente der acht Seiltrommeln.

Vorteilhaft können die Blöcke für die Linearisierung und der LQ-Regler annähernd um den Faktor 10 langsamer getaktet sein, wodurch die notwendige Rechenleistung reduziert werden kann und somit die Hardware zumindest für diese Bereich vereinfachter und kostengünstiger ausgeführt werden kann.

Das Geometrie-Modell berechnet aus Sollposition und Sollwinkel des Druckkopfes die Seilvektoren vom Seilende am Druckkopf bis zum Seilaustrittspunkte bei der Seiltrommel. Aus diesen lassen sich direkt die Seillängen ableiten.

Die jeweiligen Produkt aus normierter Seilvektoren und Seilkräfte ergeben die durch die jeweiligen Seile erzeugten vektoriellen Kräfte auf den Druckkopf. Das Kreuzprodukt aus den jeweiligen Seilendpunkten, also der Seilbefestigung oder der Bandbefestigung und den jeweiligen Seilkräften ergibt die durch die Seile erzeugten vektoriellen Drehmomente auf den Druckkopf.

Die Eingangsmatrix aller Seilkräfte in einer Druckposition hat für alle 8 Seile je eine Spalte mit 6 Zeilen. Jede Spalte enthält in den oberen drei Zeilen den normierten Seilvektor und in den unteren drei Zeilen das Kreuzprodukt aus Seilendpunkten und normiertem Seilvektor des jeweiligen Seils. Die Matrixmultiplikation der Eingangsmatrix mit allen Seilkräften ergibt so die durch die Seile erzeugte Gesamtkraft und das Gesamtmoment auf den Druckkopf.

Die Seilkraftsteuerung errechnet aus der Eingangsmatrix die idealen Seilkräfte, um den Druckkopf an dieser Position im Gleichgewicht zu halten. Dazu wird das lineare Gleichungssystem der Kräfte achter Ordnung auf ein auflösbares System sechster Ordnung reduziert, indem die zwei niedrigsten Seilkräfte auf die fixe Minimal-Vorspannkraft festgelegt werden. Um die Rechenlast zu reduzieren, kann diese Berechnung vorgelagert werden und die Seilkräfte entweder passend zum Bewegungsablauf im G-Code mitgegeben oder in Abhängigkeit zur Druckkopfposition in einer mehrdimensionalen Tabelle hinterlegt und zur Laufzeit interpoliert werden.

Die Positionsermittlung ermittelt aus den erwähnten Messgrößen den Positionsfehler des Druckkopfes. Die Linearisierung der Geometriebeziehungen zeigt, dass die transponierte negative Eingangsmatrix multipliziert mit der Verschiebung des Druckkopfes in allen sechs Freiheitsgraden genau die Seillängendifferenz ergibt. Durch umkehren dieser Gleichung zeigt sich, dass der Positionsfehler durch die negative transponierte Pseudoinverse der Eingangsmatrix multipliziert mit den Messabweichungen ermittelt werden kann. Durch anwenden der Moore-Penrose Pseudoniverse ist gewährleistet, dass der Algorithmus diejenige Position liefert, die am genauesten mit den gemessenen Seillängen übereinstimmt.

Der Algorithmus kann vorteilhaft noch erweitert werden, um die Seildehnungen zu berücksichtigen. Diese wird dann über das Hookesche Gesetzt und mit der gesamten Seillänge berechnet.

Die Positionsregelung berechnet aus dem Positionsfehler die notwendigen Seilkraftkorrekturen. Der Regler ist ein PID-Zustandsregler mit Stellgrößenbegrenzung und Anti Windup. Die realen Seilkräfte, welche die Antriebe erzeugen sollen, ergeben sich aus der Summe der idealen Seilkräfte und der Seilkraftkorrekturen.

Die Linearisierung berechnet die Systemmatrix. Diese sagt für die aktuelle Druckkopfposition aus, wie sich das Gleichgewicht verändert, wenn sich durch eine leichte Positionsverschiebung des Druckkopfes die Seilvektoren verändern. Diese Matrix beschreibt die Eigendynamik des Systems und ist für die Stabilität und für die Regelung maßgebend.

Der adaptive LQ-Regler gibt die Reglereinstellung für die Positionsregelung vor. Das LQ-Verfahren liefert aus der erwähnten Linearisierungsmatrix die Reglereinstellungen mit optimaler Einschwingzeit. Die Systemmatrix A und die Eingangsmatrix B sind aus den vorhergehenden Blöcken bekannt.

Um die Rechenlast zu reduzieren, kann die Berechnung der Linearisierung und des LQ-Reglers entweder in geringerer Frequenz ausgeführt und/oder vorgelagert werden und die Reglereinstellung entweder passend zum Bewegungsablauf im G-Code mitgegeben oder in Abhängigkeit zur Druckkopfposition in einer mehrdimensionalen Tabelle hinterlegt und zur Laufzeit interpoliert werden.

Mehrere Ausführungsbeispiele der Erfindung sind in den Zeichnungen dargestellt und werden im Folgenden näher beschrieben. Es zeigen:
Fig. 1 einen Seilroboter-3D-Drucker in einem Gehäuse mit außerhalb des Druckraums angeordneten Antrieben der Seiltrommeln,
Fig. 2 einen Seilroboter-3D-Drucker in einem Gehäuse mit innerhalb des Druckraums angeordneten Antrieben der Seiltrommeln,
Fig. 3 bis 15 schematische Darstellungen eines Seilroboter-3D-Druckers mit unterschiedlichen Seilführungen und Druckköpfen oder Rahmen für Druckköpfe,
Fig. 16a und 16b Detaildarstellung eines Druckkopfes mit Rahmen und mit Seilen eines Seilroboter-3D-Druckers,

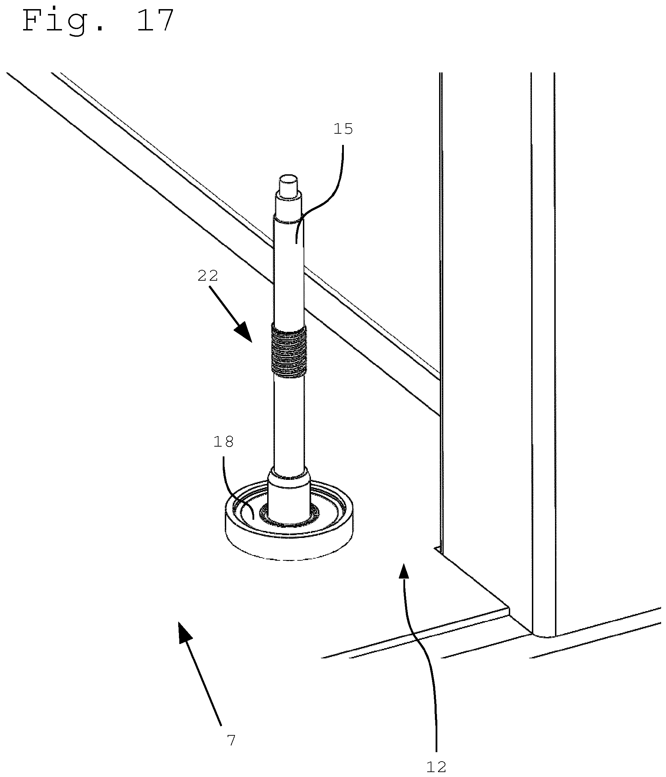

Fig. 17 eine Detaildarstellung einer Schneckenwelle im Arbeitsraum eines Seilroboter-3D-Druckers,
Fig. 18 und 19 Detaildarstellungen einer Seiltrommel, Schneckenwelle im Arbeitsraum eines Seilroboter-3D-Druckers,
Fig. 20 bis 22 Detaildarstellungen einer Seiltrommel in unterschiedlichen Perspektiven,
Fig. 23 eine schematische Detaildarstellung einer Durchführung mit Dichtung einer Schneckenwelle in den Arbeitsraum eines Seilroboter-3D-Druckers.
Fig. 24 eine schematische Detaildarstellung einer Magnetkupplung an einer Schneckenwelle im Arbeitsraum eines Seilroboter-3D-Druckers,
Fig. 25 eine schematische Detaildarstellung einer Schneckenwelle mit Antrieb außerhalb des Arbeitsraumes und mit einer Durchführung in den Arbeitsraum mit Dichtung,
Fig. 27 ein Diagramm für den Seilkraftverlauf der Seile des Seilroboter-3D-Druckers,
Fig. 28 ein Blockschaltbild zum Regelkreis des Seilroboter-3D-Druckers und
Fig. 29 ein Blockschaltbild für das Gesamtschema des Regelkreises.

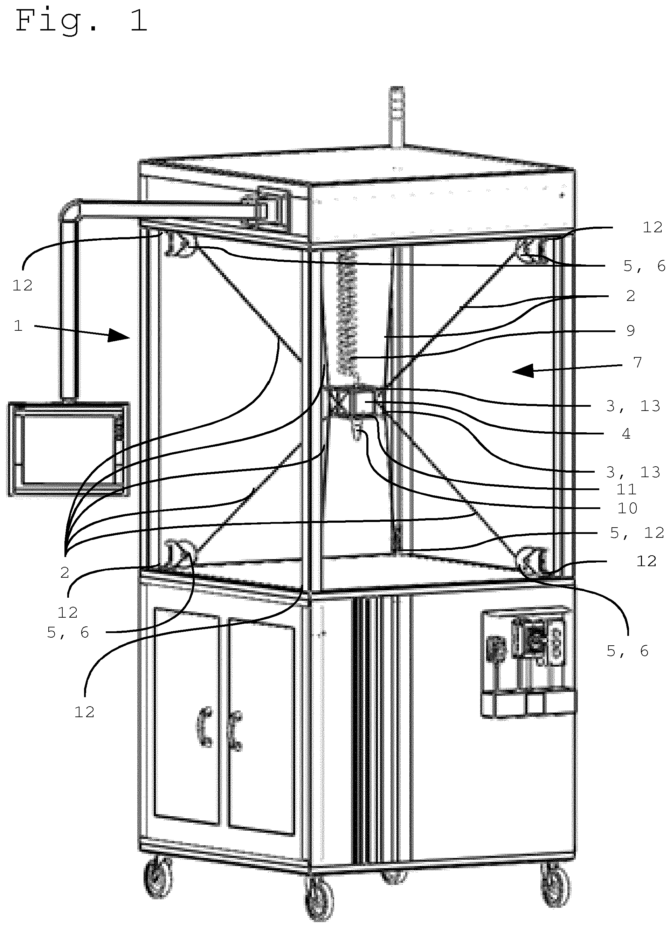

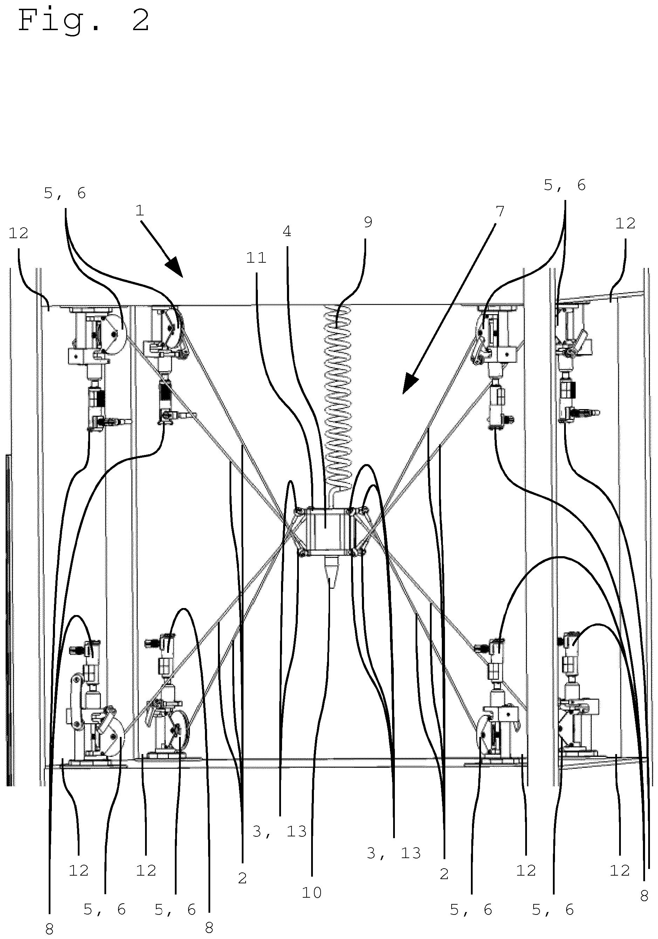

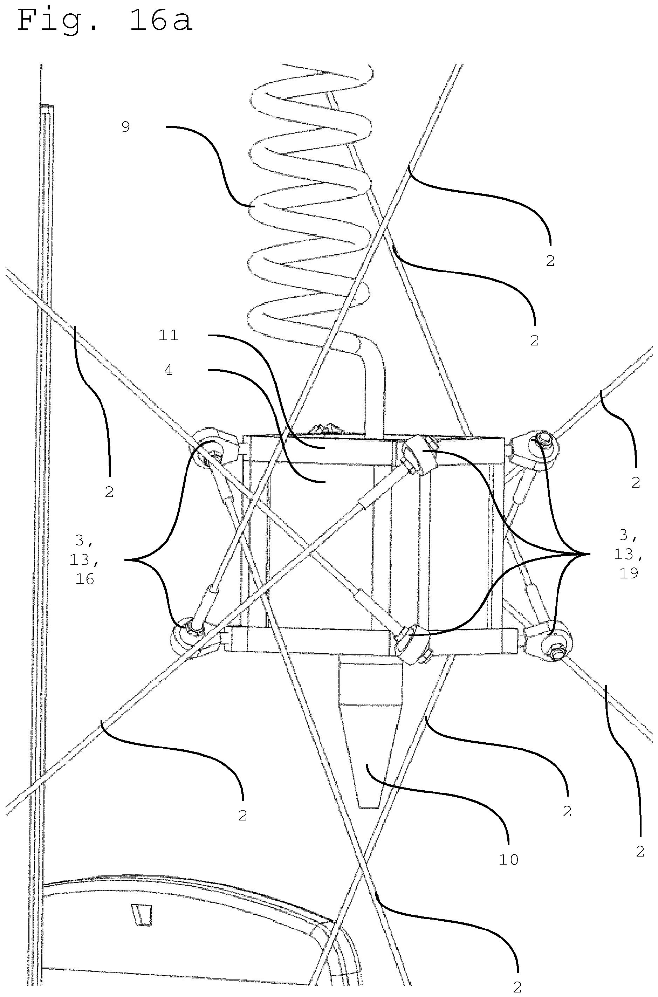

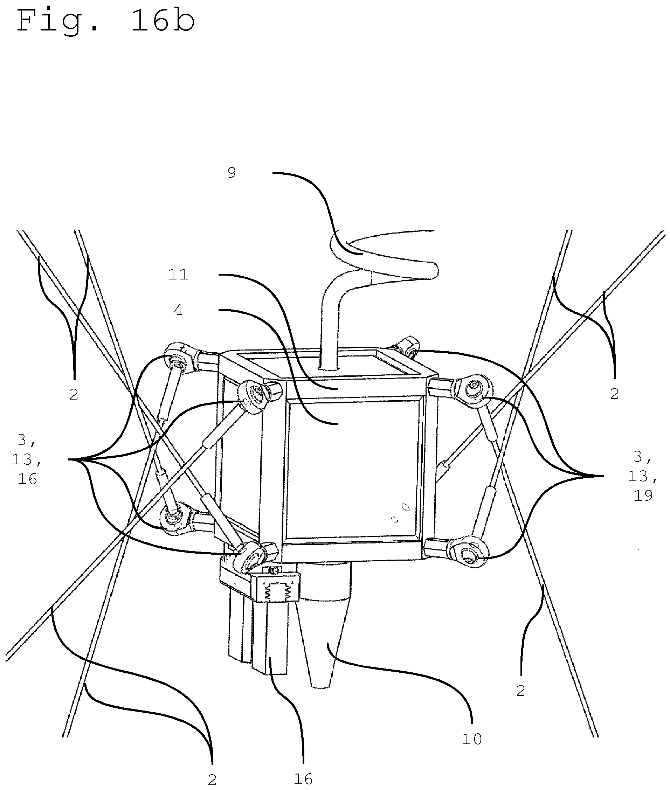

Der erfindungsgemäße Seilroboter-3D-Drucker 1 umfasst, wie in den Figuren 1 bis 15 acht Seile 2, die auch als Bänder 2 ausgeführt sein oder gegen Bänder 2 ersetzt werden können. Die Seile 2 oder Bänder 2 sind, wie im Detail in den Figuren 16a und 16b dargestellt ist, an einem ersten Ende 3 an einem Rahmen 11 als konstruktive Komponente des Druckkopfes 4 lösbar und schwimmend beweglich befestigt. Vom Druckkopf 4 sind die Seile 2 oder Bänder 2 zu jeweils einer Seiltrommel 5 geführt. Diese anderen vom Druckkopf 4 jeweils gegenüberliegenden zweiten Enden 6 der Seile 2 oder Bänder 2 sind in der Seiltrommel 5 planar kreuzungsfrei wickelbar. Die Seiltrommeln 5 sind wie in den Figuren 1 und 2 dargestellt, innerhalb eines Arbeitsraumes 7 am Boden sowie an der Decke des Arbeitsraumes 7 angeordnet. Die Seiltrommeln 5 sind über Antriebe 8 antreibbar. Je nach Einsatzzweck des Seilroboter-3D-Druckers 1 sind, wie in der Figur 1 dargestellt, die Antriebe 8 der Seiltrommeln 5 außerhalb des Arbeitsraumes 7 angeordnet. In Figur 2 ist dargestellt, dass die Antriebe 8 innerhalb des Arbeitsraumes 7 sind. Weiterhin ist, wie in den Figuren 1 und 2 sowie 16a und 16b dargestellt, an dem Druckkopf 4 zumindest eine Materialzufuhr 9 und zumindest eine Düse 10 vorgesehen. In Figur 16b ist zudem dargestellt, dass am Druckkopf 4 auch eine Greifvorrichtung 16 vorhanden ist.

Der Arbeitsraum 7 ist, wie in den Figuren 1 und 2 sowie 3 bis 15 dargestellt, quaderförmig. Würfelförmige Arbeitsräume sind ebenfalls möglich. Andere Formen oder räumliche Ausdehnungen der Arbeitsräume 7 sind unter Beachtung der entsprechenden Seilführung der Seile 2 oder Bäder 2 und der zu erreichenden Positionen des Druckkopfes 4 oder Düse 10 nicht ausgeschlossen.

Je nach Hygieneanforderungen ist der Arbeitsraum 7 von der Umgebung abtrennbar oder verschließbar oder steril. Wie in Figur 1 und 2 dargestellt, ist der Seilroboter-3D-Druckers 1 einem Schrank, der für eine erhöhte Flexibilität vorzugsweise mobilen untergebracht. Der Arbeitstraum 7 ist hierbei quaderförmig, kann jedoch auch würfelförmig sein.

In den Figuren 16a und 16b ist dargestellt, dass um den Druckkopf 4 ein Rahmen 11 angeordnet ist.

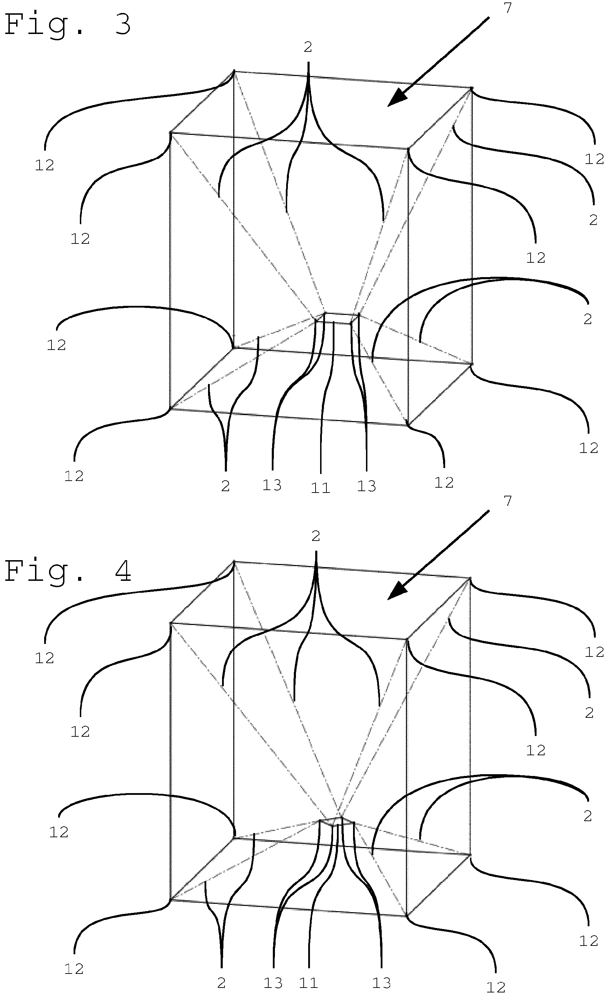

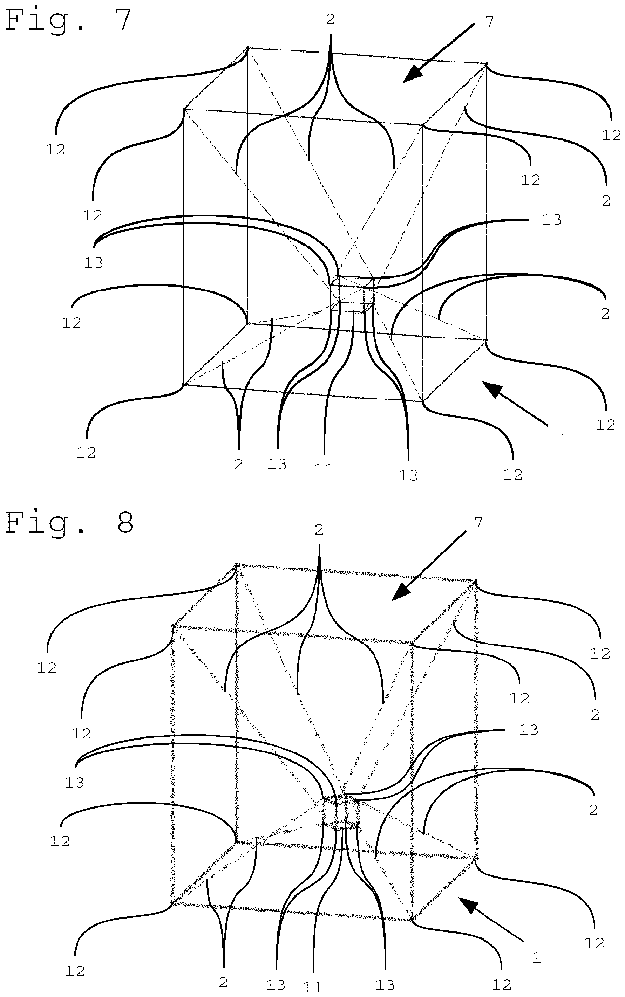

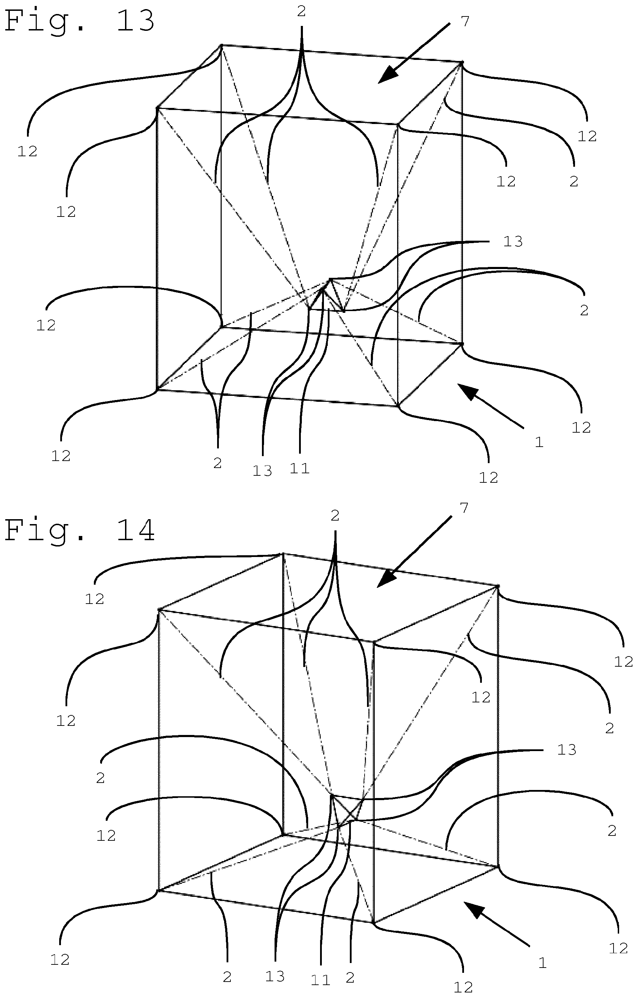

Neben der, in den Figuren 16a und 16b wie auch in den Figuren 7 bis 12 dargestellten, an den Druckkopf 4 angepassten Form als würfelförmiger Rahmen 11 kann der Rahmen 11 auch eine Quaderform (nicht dargestellt) oder, wie in den Figuren 13 bis 15, Tetraederform oder, wie in den Figuren 3 bis 6, flach als Quadrat oder als Rechteck (nicht dargestellt) oder rund (nicht dargestellt) oder oval (nicht dargestellt) sein.

Der Druckkopf 4 kann an oder in dem jeweiligen Rahmen 11 angeordnet. Das jeweilige erste Ende 3 der jeweiligen Seile 2 oder Bänder 2 ist an dem Rahmen 11 schwimmend oder beweglich befestigt, wie in den Figuren 16a und 16b dargestellt, so dass je nach Lage die sich die gespannten Seile 2 oder Bänder 2 gegenüber dem Rahmen 11 oder Druckkopf 4 spannungsfrei ausrichten bzw. der Bewegung und Lageänderung des Druckkopfes 4 bzw. des Rahmens 111 folgen können.

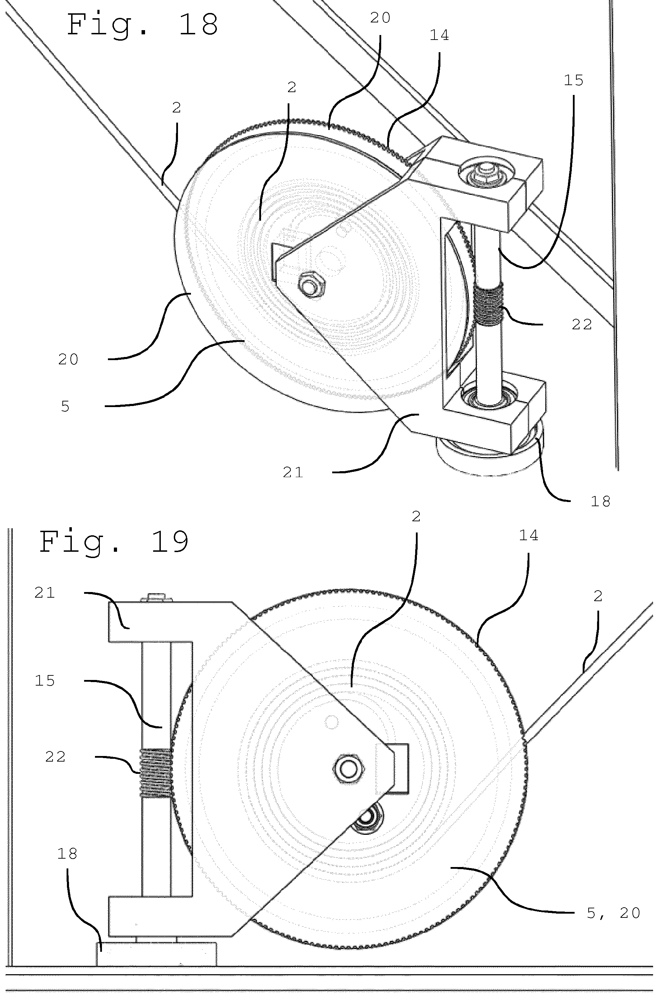

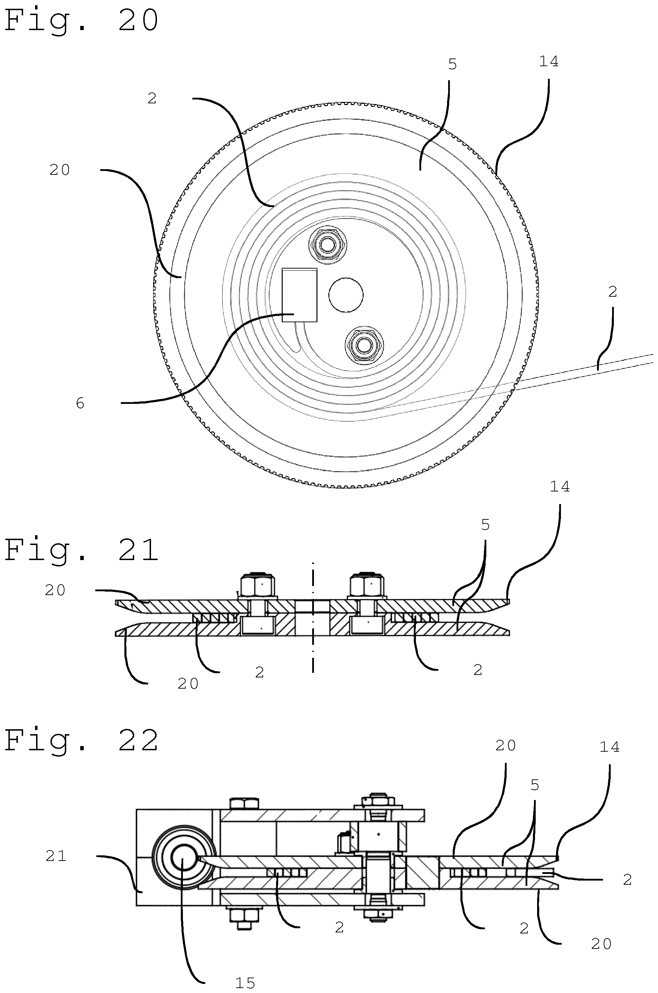

Wie in den Figuren 1 und 2 dargestellt, sind die Seiltrommeln 5 im Bereich der Ecken 12 des würfelförmigen oder quaderförmigen Arbeitsraumes 7 angeordnet. Die Seiltrommeln 5 weisen, wie in den Figuren 18 bis 21 dargestellt, an zumindest einer der die Seilrollen 5 bilden Rollenseitenscheiben 20 eine Außenverzahnung 14 auf. Die Außenverzahnung 14 der Seiltrommel 5 bzw. der Rollenseitenscheibe 20 greift in eine Schneckenwelle 15 ein. Die Seiltrommel 5 ist in einer die Schneckenwelle 15 umgreifenden Halterung 21 um die Schneckenwelle 15 schwenkbar, wie in den Figuren 18, 19 und 21 dargestellt.

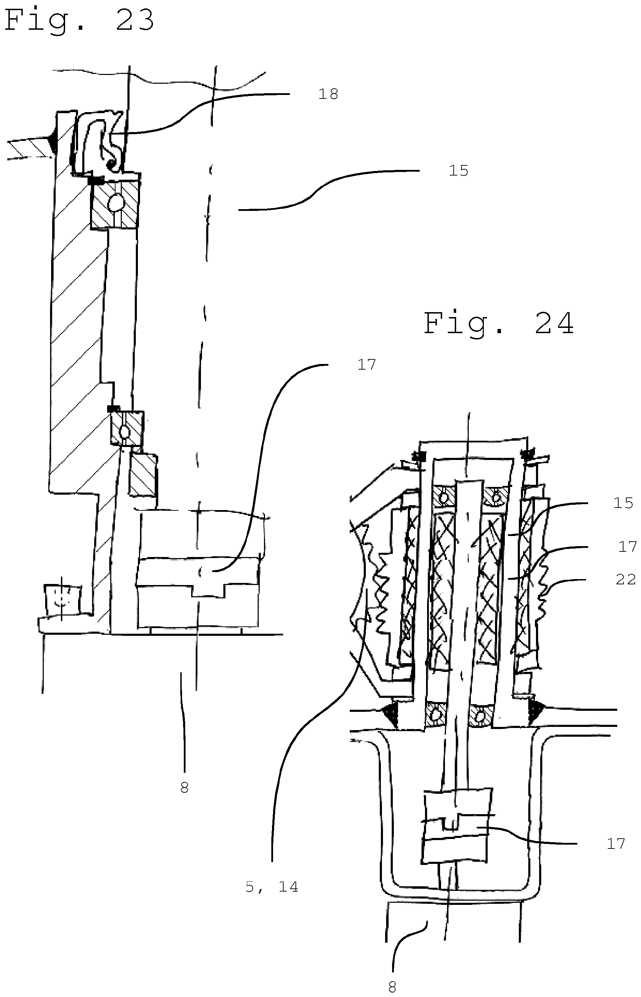

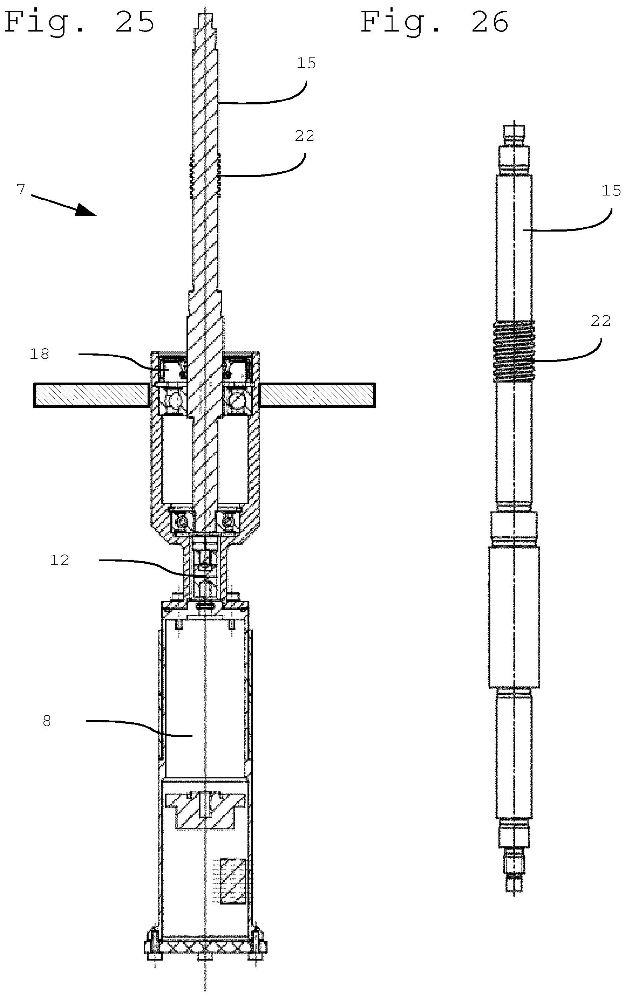

Der Antrieb 8 treibt die Schneckenwelle 15 unmittelbar über eine mechanische Kupplung, wie in den Figuren 23 und 25 dargestellt, oder mittelbar über eine Magnetkupplung, wie in der Figur 24 dargestellt, die Schneckenwelle 15 an. Die Schneckenwelle 15 ist, sofern der Antrieb 8 außerhalb des Arbeitsraumes 7 ist, durch eine Dichtung aus dem Arbeitsraum 7 zum Antrieb 8 geführt und mittels einer Kupplung 17 mit dem Antrieb 8 gekoppelt.

Alternativ ist wie in Figur 2 dargestellt, der Antrieb 8 innerhalb des Arbeitsraums 7 angeordnet und mit der Schneckenwelle 15 gekoppelt oder wirkverbunden ist.

Die Schneckenwelle 15 weist insbesondere im Bereich der Seiltrommel 5 bzw. dem Eingriff der Außenverzahnung 14 der Rollenseitenscheibe 20 der Seiltrommel 5 einen Bereich mit einer schraubenförmige Schnecke 22 auf, wie in den Figuren 18, 19, 25 und 26 dargestellt ist.

Der Druckkopf 4 oder Bestandteile des Druckkopfes 4 sind in ein zwei oder mehr Achsen rotierend ausgeführt. (nicht dargestellt) Wie in den Figuren 3 bis 15 sind unterschiedliche Varianten der Seilführung im Arbeitsraum 7 dargestellt, bei welchen jeweils ein Seil 2 oder Band 2 von den jeweiligen Seiltrommeln 5 oben und unten jeweils einzeln oder paarweise an eine Ecke 13 des Rahmens 11 geführt sind. Vereinfachend wird im Folgenden nur von den Seilen 2 gesprochen, wobei die dazugehörenden Seiltrommeln 5 jeweils als vorhanden verstanden und mit umfasst sind und die Beschreibung ebenfalls auch für Bänder 2 gilt, sofern diese statt Seilen 2 eingesetzt oder bevorzugt werden. Es ist für die folgende Betrachtung unerheblich, wo und wie genau die Seiltrommeln 5 montiert sind, wichtig ist deren Anordnung im Bereich der Ecken 12 des Arbeitsraumes 7.

Der jeweilige Arbeitsraum 7 weist vier Seitenwände mit jeweils vier Ecken 12 und jeweils senkrechte und waagerechte Kanten zwischen jeweils zwei Ecken 12 auf. Die Waagerechten Kanten sind entsprechend oben oder unten sowie senkrecht zwischen zwei Seitenwänden vorhanden. Naturgemäß teilen sich zwei benachbarte Seitenwände eine senkrechte Kante und zwei Ecken 12, nämlich eine obere und eine untere Ecke 12 in Bezug auf die beiden benachbarten Seitenwände gemeinsame senkrechte Kante. Im Folgenden wird nur in vereinfachter darauf Bezug genommen.

So sind in Figur 3 die Seile 2 von zwei benachbarten Ecken 12 einer der senkrechten Kanten gemeinsam an die zur Kante nächstgelegene Ecke 13 des flachen quadratischen Rahmens 11 geführt.

So sind in Figur 4 die Seile 2 von zwei benachbarten Ecken 12 einer der waagerechten Kanten gemeinsam an eine Ecke 13 des flachen quadratischen Rahmens 11 geführt, wobei die betroffenen Kanten des Arbeitsraumes 7 jeweils unten und jeweils oben zueinander parallel sind, jedoch die betroffenen Kanten des Arbeitsraumes 7 oben und zu den betroffenen Kanten unten des Arbeitsraumes 7 um 90 Grad versetzt sind.

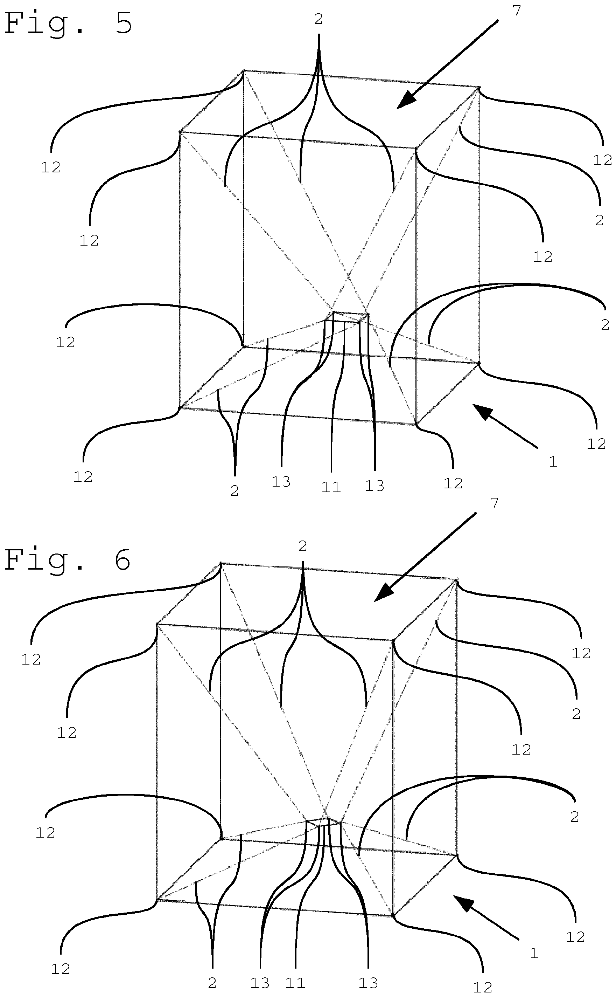

In Figur 5 sind die Seile 2 von den im Arbeitsraum 7 diagonal gegenüberliegenden Ecken 12 an jeweils eine Ecke 13 des flachen quadratischen Rahmens geführt.

In Figur 6 sind die Seile 2 von den an einer Seitenwand diagonal gegenüberliegenden Ecken 12 an jeweils die zur dieser Seitenwand weisenden Ecke 13 des flachen quadratischen Rahmens 11 geführt.

Seitliche Neigungen des flachen Rahmens 11 sind nur begrenzt möglich.

In den Figuren 7 bis 12 sind die Seile 2 an einen quader- oder würfelförmigen Rahmen 11 geführt.

So sind in Figur 7 die Seile 2 jeweils von den an einer Seitenwand diagonal gegenüberliegenden Ecken 12 einerseits einzeln und überkreuz an die Ecken 13 der zu dieser Seitenwand weisend unteren waagerechten Kante des Rahmens 11 und anderseits einzeln nicht überkreuz an die Ecken 13 der von dieser Seitenwand wegweisenden oberen waagerechten Kante des Rahmens 11 geführt.

In Figur 8 sind die Seile 2 jeweils einzeln von den benachbarten Ecken 12 abwechselnd von einer oberen und unteren waagerechten Kante an die zu dieser Seitenwand bzw. Kante weisenden oberen und unteren Ecke 13 einer senkrechten Kante des Rahmens 11 geführt.

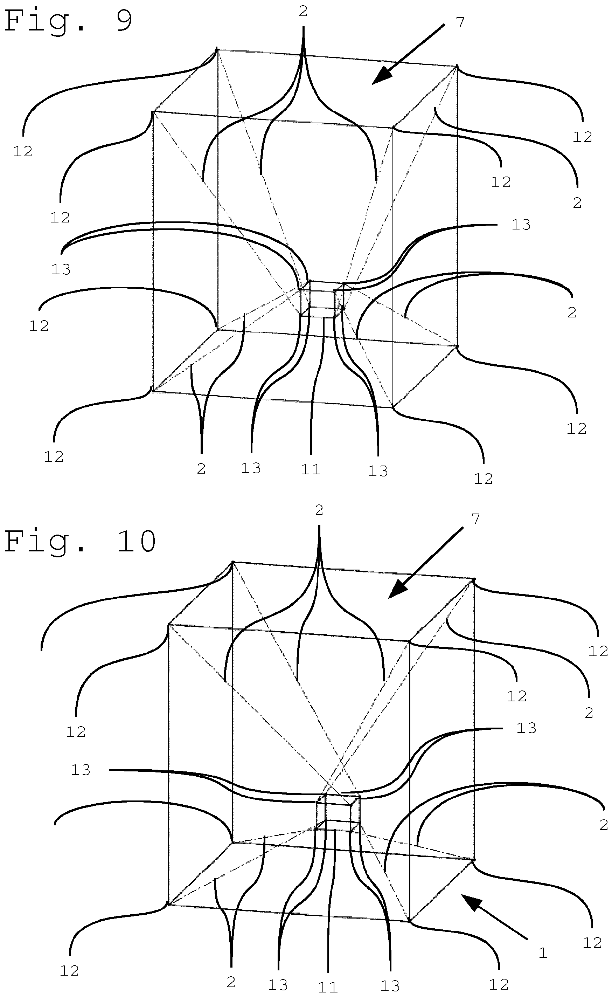

In Figur 9 sind die Seile 2 einerseits jeweils einzeln von den benachbarten Ecken 12 von zueinander parallelen oberen und unteren Kanten des Arbeitsraumes 7 an die Ecken 13 von zueinander und zu den oberen und unteren Kanten des Arbeitsraumes 7 parallelen unteren und oberen Kanten des Rahmens 11 geführt, so dass ein Seil 2 einer oberen Ecke 12 einer senkrechten Kante des Arbeitsraumes 7 an eine untere Ecke 13 einer senkrechten Kante des Rahmens 11 geführt ist und umgekehrt ein Seil 2 einer untere Ecke 12 der gleichen senkrechten Kante des Arbeitsraumes 7 an eine oberen Ecke 13 der gleichen senkrechten Kante des Rahmens 11 geführt ist.

So sind in Figur 10 die Seile 2 einerseits jeweils einzeln von den benachbarten Ecken 12 von zueinander parallelen oberen Kanten des Arbeitsraumes 7 an die nicht überkreuz gegenüberliegenden Ecken 13 von zueinander und zu den oberen Kanten des Arbeitsraumes 7 parallelen oberen Kanten des Rahmens 11 und anderseits jeweils einzeln von den benachbarten Ecken 12 von zueinander parallelen unteren Kanten des Arbeitsraumes 7 überkreuz an die Ecken 13 von zueinander und zu den unteren Kanten des Arbeitsraumes 7 parallelen unteren Kanten des Rahmens 11 geführt.

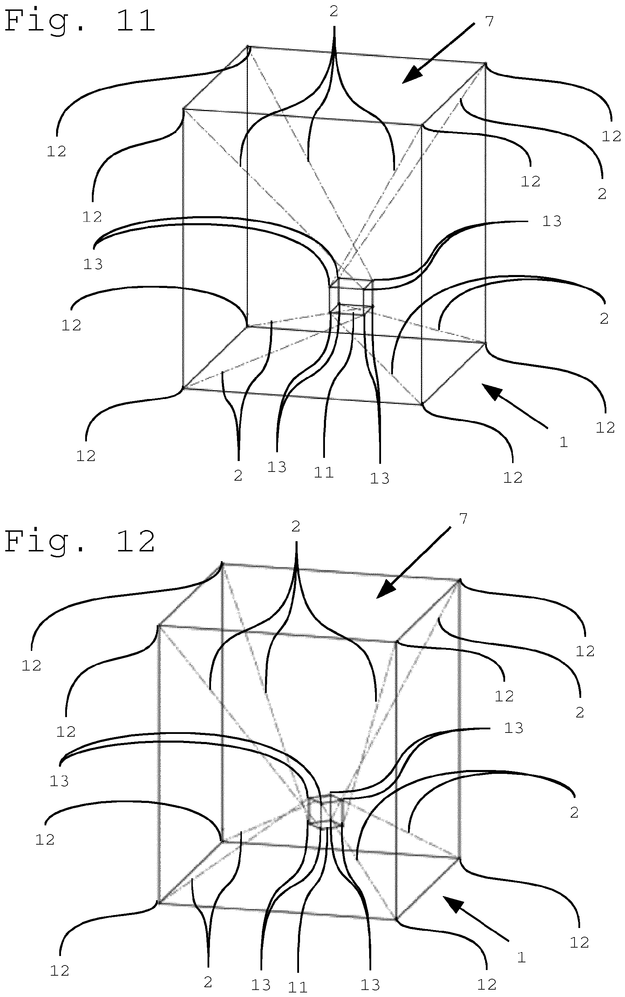

In Abweichung zur Figur 10 sind in der Figur 11 die Seile 2 einerseits jeweils einzeln von den benachbarten Ecken 12 von zueinander parallelen oberen Kanten des Arbeitsraumes 7 an die nicht überkreuz gegenüberliegenden Ecken 13 von zueinander und zu den oberen Kanten des Arbeitsraumes 7 parallelen oberen Kanten des Rahmens 11 und anderseits jeweils einzeln von den benachbarten Ecken 12 von zueinander parallelen unteren Kanten des Arbeitsraumes 7 ebenfalls an die nicht überkreuz gegenüberliegenden Ecken 13 von zueinander und zu den unteren Kanten des Arbeitsraumes 7 parallelen unteren Kanten des Rahmens 11 geführt.

In Figur 12 sind die Seile 2 jeweils einzeln von den auf einer Seitenfläche diagonal gegenüberliegenden Ecken 12 abwechselnd an die zu dieser Seitenwand bzw. Kante weisenden oberen und unteren Ecke 13 einer senkrechten Kante des Rahmens 11 geführt, so dass das Seil 2 von einer unteren Ecke 12 der jeweiligen Seitenwand an die jeweils obere Ecke 13 der senkrechten Kante des Rahmens 11 und das Seil 2 von einer zur unteren Ecke 12 auf der jeweiligen Seitenwand diagonal gegenüberliegenden oberen Ecke 12 der jeweiligen Seitenwand an die jeweils untere Ecke 13 der gleichen senkrechten Kante des Rahmens 11 geführt ist.

In den Figuren 13 bis 15 sind die Seile 2 an einen tetraederförmigen Rahmen 11 geführt.

So sind in Figur 13 die Seile 2 von zwei benachbarten Ecken 12 einer der waagerechten Kanten des Arbeitsraumes 7 gemeinsam an eine Ecke 13 des tetraederförmigen Rahmens 11 geführt, wobei die betroffenen Kanten des Arbeitsraumes 7 jeweils unten und jeweils oben zueinander parallel und gegenüberliegend sind, jedoch die betroffenen Kanten des Arbeitsraumes 7 oben und zu den betroffenen Kanten des Arbeitsraumes 7 unten um 90 Grad versetzt sind. Der tetraederförmige Rahmen 11 ist dabei so angeordnet, dass eine seiner Kanten oben und eine seiner Kanten unten jeweils waagerecht angeordnet sind. Die Seile 2 von den Ecken 12 der unteren waagerechten Kanten des Arbeitsraumes 7 sind an die Ecken 13 der oben liegenden waagerechten Kante des tetraederförmigen Rahmens 11 geführt während die Seile 2 von den Ecken 12 der oben waagerechten Kanten des Arbeitsraumes 7 sind an die Ecken 13 der unten liegenden waagerechten Kante des tetraederförmigen Rahmens 11 geführt sind.

In Figur 14 sind dagegen die Seile 2 von zwei benachbarten Ecken 12 einer der waagerechten Kanten des Arbeitsraumes 7 gemeinsam an eine Ecke 13 des tetraederförmigen Rahmens 11 geführt, wobei die betroffenen Kanten des Arbeitsraumes 7 jeweils unten und jeweils oben zueinander parallel und gegenüberliegend sind, jedoch die betroffenen Kanten des Arbeitsraumes 7 oben und zu den betroffenen Kanten des Arbeitsraumes 7 unten um 90 Grad versetzt sind. Der tetraederförmige Rahmen 11 ist dabei so angeordnet, dass eine seiner Kanten oben und eine seiner Kanten unten jeweils waagerecht angeordnet sind. Die Seile 2 von den Ecken 12 der unteren waagerechten Kanten des Arbeitsraumes 7 sind an die Ecken 13 der unten liegenden waagerechten Kante des tetraederförmigen Rahmens 11 geführt während die Seile 2 von den Ecken 12 der oben waagerechten Kanten des Arbeitsraumes 7 sind an die Ecken 13 der oben liegenden waagerechten Kante des tetraederförmigen Rahmens 11 geführt sind.

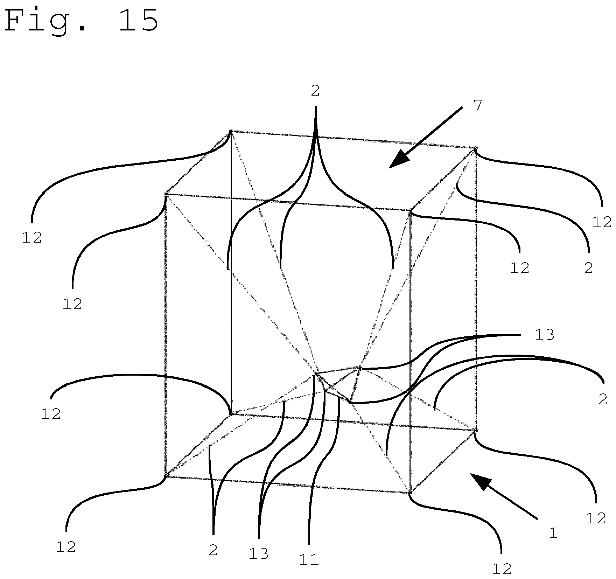

In Figur 15 sind die Seile 2 von zwei benachbarten Ecken 12 einer der senkrechten Kanten des Arbeitsraumes 7 gemeinsam an eine Ecke 13 des tetraederförmigen Rahmens 11 geführt. Dabei können sich jeweils die oben Seile 2 und jeweils die unteren Seile 2 von zwei senkrechten Kanten einer Seitenwand des Arbeitsraumes 7 im Verlauf zum tetraederförmigen Rahmen 11 kreuzen.

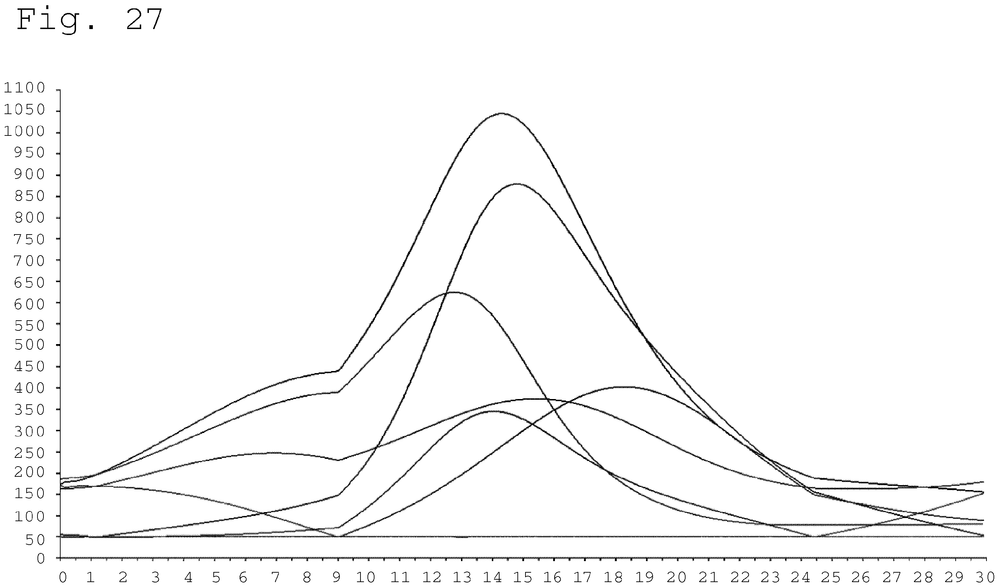

Die Figur 27 zeigt als Seilkraftverlauf die errechneten theoretischen Seilkräfte einer Kurvenbahn bei der Minimal-Vorspannkraft von 20 Newton. Im zeitlichen Verlauf bei 9 und bei 24.5 Sekunden findet ein Übergang statt, wo ein Seil mit Minimal-Vorspannkraft durch ein anderes abgelöst wird. Dieser Vorgang findet statt, sobald die drittniedrigste Seilkraft unter die Minimal-Vorspannkraft zu sinken droht und ist bedingt durch die Änderung der Seilvektoren aufgrund der Bewegung in einer Bahnkurve des Druckkopfes im Arbeitsraum bzw. Druckraum.

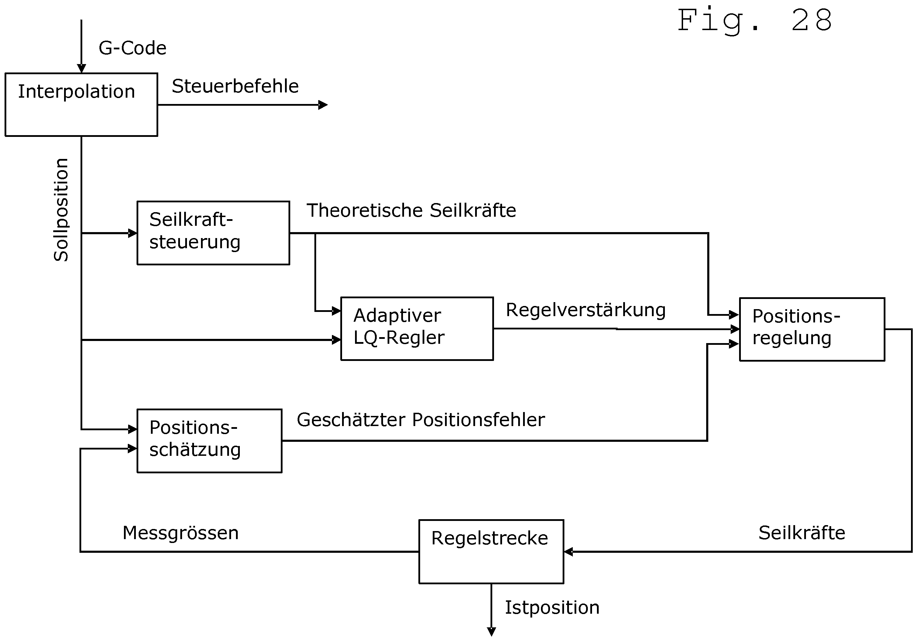

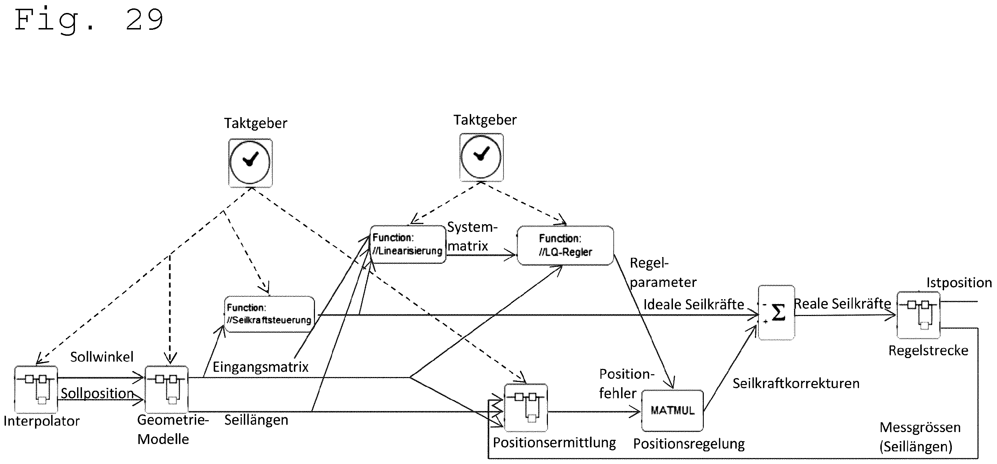

In Figur 28 ist das Blockschaltbild zum Regelkreis des Seilroboter-3D-Druckers dargestellt. In Figur 29 ist ein Blockschaltbild für das Gesamtschema des Regelkreises dargestellt.

Das Geometrie-Modell werden aus der Sollposition und dem Sollwinkel des Druckkopfes 4 die Seilvektoren vom Seilende am Druckkopf 4 bis zur Seiltrommel 5 berechnet, woraus sich die Seillängen direkt ableiten lassen. Die Multiplikation der normierten Seilvektoren mit den Seilkräfte ergibt die durch die Seile 2 erzeugten vektoriellen Kräfte auf den Druckkopf 4, während das Kreuzprodukt der Seilendpunkten mit den Seilkräften die durch die Seile 2 erzeugten vektoriellen Drehmomente auf den Druckkopf 4 ergibt.

In der Positionsermittlung erfolgt aus den Messgrößen die Ermittlung des Positionsfehlers des Druckkopfes 4. Durch eine Linearisierung der Geometriebeziehungen indem die transponierte negative Eingangsmatrix mit der Verschiebung des Druckkopfes 4 in allen sechs Freiheitsgraden multipliziert wird, dass sich genau die Seillängendifferenz ergibt. Eine Umkehrung dieser Gleichung ermöglicht, dass der Positionsfehler aus dem Produkt aus negativer transponierter Pseudoinverse der Eingangsmatrix und der Messabweichungen ermittelt werden kann. Unter Einbeziehung der Moore-Penrose Pseudoniverse liefert der Algorithmus diejenige Position, die am genauesten mit den gemessenen Seillängen übereinstimmt.

### Zusammenstellung der Bezugszeichen

- 1: - Seilroboter-3D-Drucker, Seilroboter
- 2: - Seil, Band
- 3: - erstes Ende des Seils oder des Bandes
- 4: - Druckkopf
- 5: - Seiltrommel
- 6: - zweites Ende des Seils oder des Bandes
- 7: - Arbeitsraum
- 8: - Antrieb
- 9: - Materialzufuhr
- 10: - Düse
- 11: - Rahmen
- 12: - Ecke
- 13: - Ecke
- 14: - Außenverzahnung
- 15: - Schneckenwelle
- 16: - Greifvorrichtung
- 17: - Kupplung
- 18: - Dichtung
- 19: - Seilbefestigung oder Bandbefestigung am Druckkopf
- 20: - Rollenseitenscheibe
- 21: - Haltung
- 22: - schraubenförmige Schnecke

## Patentansprüche

1. Seilroboter-3D-Drucker (1), umfassend einen Seilroboter (1) mit acht Seilen (2) oder Bändern (2), wobei die Seile (2) oder Bänder (2) an einem ersten Ende (3) an einem Druckkopf (4) lösbar befestigt sind und von dem Druckkopf (4) zu jeweils einer Seiltrommel (5) geführt sind und das andere vom Druckkopf (4) jeweils gegenüberliegende zweite Ende (6) der Seile (2) oder Bänder (2) in der Seiltrommel (5) planar kreuzungsfrei wickelbar sind, wobei die Seiltrommeln (5) innerhalb eines Arbeitsraumes (7) angeordnet sind und wobei die Seiltrommeln (5) antreibbar sind und die Antriebe (8) der Seiltrommeln (5) außerhalb oder innerhalb des Arbeitsraumes (7) angeordnet sind und dass an dem Druckkopf (4) zumindest eine Materialzufuhr (9) und zumindest eine Düse (10) vorgesehen ist,
**dadurch gekennzeichnet,**
**dass** die Seiltrommel (5) eine Außenverzahnung (14) besitzt und die Außenverzahnung (14) der Seiltrommel (5) in eine Schneckenwelle (15) eingreift, wobei der Antrieb (8) unmittelbar oder mittelbar die Schneckenwelle (15) antreibt.

2. Seilroboter-3D-Drucker nach Anspruch 1,
**dadurch gekennzeichnet,**
**dass** der Arbeitsraum (7) abtrennbar oder verschließbar oder steril ist.

3. Seilroboter-3D-Drucker nach einem der Ansprüche 1 und 2,
**dadurch gekennzeichnet,**
**dass** der Arbeitsraum (7) würfelförmig oder quaderförmig ist.

4. Seilroboter-3D-Drucker nach einem der vorhergehenden Ansprüche,
**dadurch gekennzeichnet,**
**Dass** die Seiltrommeln (5) im Bereich der Ecken (12) des würfelförmigen oder quaderförmigen Arbeitsraumes (7) angeordnet sind.

5. Seilroboter-3D-Drucker nach einem der vorhergehenden Ansprüche,
**dadurch gekennzeichnet,**
**dass** der Druckkopf (4) an oder in einem quadratischen oder rechteckigen oder runden Rahmen (11), einem würfelförmigen Rahmen (11) oder queraderförmigen Rahmen (11) oder einem tetraederförmigen Rahmen (11) angeordnet ist und das erste Ende (3) der jeweiligen Seile (2) oder Bänder (2) an dem Rahmen (11) schwimmend oder beweglich befestigt sind.

6. Seilroboter-3D-Drucker nach einem der vorhergehenden Ansprüche,
**dadurch gekennzeichnet,**
**dass** der Druckkopf (4) oder Bestandteile des Druckkopfes (4) in ein zwei oder mehr Achsen rotierend ausgeführt sind.

7. Seilroboter-3D-Drucker nach Anspruch 5,
**dadurch gekennzeichnet,**
**dass** ein Seil (2) oder Band (2) von den jeweiligen Seiltrommeln (5) oben und unten jeweils einzeln oder paarweise an eine Ecke (13) des Rahmens (11) geführt sind und/oder
**dass** die Seile (2) oder Bänder (2) aus jeweils den Seiltrommeln (5) benachbarter Ecken (12) einer den Arbeitsraum begrenzenden Seitenfläche oder einer Kante unten oder oben, aus den einer der den Arbeitsraum (7) begrenzenden Seitenflächen diagonal gegenüberliegenden Ecken (12), aus den im Arbeitsraum (7) diagonal gegenüberliegenden Ecken (12) jeweils einzeln oder paarweise an eine Ecke (13) des Rahmens (11) und/oder jeweils einzeln oder paarweise an benachbarte oder diagonal gegenüberliegende Ecken (13) des Rahmens (11) geführt sind.

8. Seilroboter-3D-Drucker nach einem der vorhergehenden Ansprüche 1 bis 6,
**dadurch gekennzeichnet,**
**dass** die Seile (2) oder Bänder (2) aus jeweils den Seiltrommeln (5) benachbarter Ecken (12) einer den Arbeitsraum begrenzenden Seitenfläche oder einer Kante unten oder oben, aus den einer der den Arbeitsraum (7) begrenzenden Seitenflächen diagonal gegenüberliegenden Ecken (12), aus den im Arbeitsraum (7) diagonal gegenüberliegenden Ecken (12) jeweils einzeln oder paarweise an eine Ecke (13) des Druckkopfes (4) und/oder jeweils einzeln oder paarweise an benachbarte oder diagonal gegenüberliegende Ecken (13) des Druckkopfes (4) geführt sind.

9. Seilroboter-3D-Drucker nach Anspruch 1,
**dadurch gekennzeichnet,**
**dass** die Seiltrommel (5) um die Schneckenwelle (15) schwenkbar ist.

10. Seilroboter-3D-Drucker nach einem der vorhergehenden Ansprüche 1 und 9,
**dadurch gekennzeichnet,**
**dass** die Schneckenwelle (15) durch eine Dichtung aus den Arbeitsraum (7) zum Antrieb (8) geführt ist oder mittels einer Kupplung (17) mit dem Antrieb (8) gekoppelt oder wirkverbunden ist oder dass der Antrieb (8) innerhalb des Arbeitsraums (7) angeordnet und mit der Schneckenwelle (15) gekoppelt oder wirkverbunden ist.

11. Seilroboter-3D-Drucker nach einem der vorhergehenden Ansprüche,
**dadurch gekennzeichnet,**
**dass** der Druckkopf (4) zumindest eine Greifvorrichtung (16) umfasst.

## Claims

1. Cable robot 3D printer (1), comprising a cable robot (1) with eight cables (2) or bands (2), where the cables (2) or bands (2) are releasably attached at one end (3) to a print head (4) and led from the print head (4) to a respective cable drum (5), and the other end (6) opposite from the print head (4) of the cables (2) or bands (2) can be wound in the cable drum (5) in a planar, crossing-free manner, where the cable drums (5) are located within a workspace (7), and where the cable drums (5) are drivable and the drives (8) of the cable drums (5) are arranged outside or inside the workspace (7), and where at least one material feed (9) and at least one nozzle (10) are provided on the print head (4),
**characterised in**
**that** the cable drum (5) has an external gearing (14) and the external gearing (14) of the cable drum (5) engages a worm shaft (15), where the drive (8) directly or indirectly drives the worm shaft (15).

2. Cable robot 3D printer according to claim 1,
**characterised in**
**that** the workspace (7) is separable, closable, or sterile.

3. Cable robot 3D printer according to any of claims 1 and 2,
**characterised in**
**that** the workspace (7) is cubic or rectangular.

4. Cable robot 3D printer according to any of the preceding claims,
**characterised in**
**that** the cable drums (5) are arranged in the area of the corners (12) of the cubic or rectangular workspace (7).

5. Cable robot 3D printer according to any of the preceding claims,
**characterised in**
**that** the print head (4) is arranged on or in a square or rectangular or round frame (11), a cubic frame (11) or a cross-shaped frame (11) or a tetrahedral frame (11), and the first end (3) of the respective cables (2) or bands (2) are floatingly or movably attached to the frame (11).

6. Cable robot 3D printer according to any of the preceding claims,
**characterised in**
**that** the print head (4) or components of the print head (4) are executed to rotate about two or more axes.

7. Cable robot 3D printer according to claim 5,
**characterised in**
**that** a cable (2) or band (2) from the respective cable drums (5) is led individually or in pairs from above and below to a corner (13) of the frame (11) and/or
**that** the cables (2) or bands (2) from the cable drums (5) of adjacent corners (12) of a side of the workspace (7) or an edge below or above, from one of the sides of the workspace (7) diagonally opposite corners (12), from the diagonally opposite corners (12) within the workspace (7) are led individually or in pairs to a corner (13) of the frame (11) and/or individually or in pairs to adjacent or diagonally opposite corners (13) of the frame (11).

8. Cable robot 3D printer according to any of the preceding claims 1 to 6,
**characterised in**
**that** the cables (2) or bands (2) from the cable drums (5) of adjacent corners (12) of a side of the workspace (7) or an edge below or above, from one of the sides of the workspace (7) diagonally opposite corners (12), from the diagonally opposite corners (12) within the workspace (7) are led individually or in pairs to a corner (13) of the print head (4) and/or individually or in pairs to adjacent or diagonally opposite corners (13) of the print head (4).

9. Cable robot 3D printer according to claim 1,
**characterised in**
**that** the cable drum (5) is pivotable about the worm shaft (15).

10. Cable robot 3D printer according to any of the preceding claims 1 and 9,
**characterised in**
**that** the worm shaft (15) is led through a seal from the workspace (7) to the drive (8) or is coupled or functionally connected to the drive (8) by a coupling (17), or that the drive (8) is arranged within the workspace (7) and is coupled or functionally connected to the worm shaft (15).

11. Cable robot 3D printer according to any of the preceding claims,
**characterised in**
**that** the print head (4) comprises at least one gripping device (16).

## Revendications

1. Imprimante 3D de robot à câble (1), comprenant un robot à câble (1) avec huit câbles (2) ou bandes (2), les câbles (2) ou les bandes (2) étant fixés de manière amovible à une première extrémité (3) sur une tête d'impression (4) et étant guidés de la tête d'impression (4) vers respectivement un tambour à câble (5) et l'autre deuxième extrémité (6) des câbles (2) ou des bandes (2) respectivement opposée à la tête d'impression (4) pouvant être enroulée de manière plane sans croisement dans le tambour à câble (5), les tambours à câble (5) étant disposés à l'intérieur d'un espace de travail (7) et les tambours à câble (5) pouvant être entraînés et les entraînements (8) des tambours à câble (5) étant disposés à l'extérieur ou à l'intérieur de l'espace de travail (7) et en ce qu'il est prévu sur la tête d'impression (4) au moins une alimentation en matière (9) et au moins une buse (10),
**caractérisé en ce que**
le tambour à câble (5) possède une denture extérieure (14) et la denture extérieure (14) du tambour à câble (5) s'engrène dans un arbre à vis sans fin (15), l'entraînement (8) entraînant directement ou indirectement l'arbre à vis sans fin (15).

2. Imprimante 3D de robot à câble selon la revendication 1,
**caractérisé en ce que**
l'espace de travail (7) est séparable ou peut être fermé ou est stérile.

3. Imprimante 3D de robot à câble selon l'une des revendications 1 et 2,
**caractérisé en ce que**
l'espace de travail (7) est de forme cubique ou parallélépipédique.

4. Imprimante 3D de robot à câble selon l'une des revendications précédentes,
**caractérisé en ce que**
les tambours à câble (5) sont disposés dans la zone des coins (12) de l'espace de travail (7) en forme de cube ou de parallélépipède.

5. Imprimante 3D de robot à câble selon l'une des revendications précédentes,
**caractérisé en ce que**
la tête d'impression (4) est disposée sur ou dans un cadre carré ou rectangulaire ou rond (11), un cadre cubique (11) ou un cadre en forme de veine transversale (11) ou un cadre tétraédrique (11), et la première extrémité (3) des câbles (2) ou des bandes (2) respectifs est fixée au cadre (11) de manière flottante ou mobile.

6. Imprimante 3D de robot à câble selon l'une des revendications précédentes,
**caractérisé en ce que**
la tête d'impression (4) ou des composants de la tête d'impression (4) sont réalisés de manière rotative selon un axe double ou plus.

7. Imprimante 3D de robot à câble selon la revendication 5,
**caractérisé en ce que**
un câble (2) ou une bande (2) est guidé(e) par les tambours à câble (5) respectifs en haut et en bas, respectivement individuellement ou par paires, vers un coin (13) du cadre (11) et/ou **en ce que** les câbles (2) ou les bandes (2) proviennent de coins (12) respectivement voisins des tambours de câble (5) d'une surface latérale délimitant l'espace de travail ou d'un bord en bas ou en haut, de coins (12) diagonalement opposés à l'une des surfaces latérales délimitant l'espace de travail (7), sont guidés à partir des coins (12) opposés en diagonale dans l'espace de travail (7) respectivement individuellement ou par paires vers un coin (13) du cadre (11) et/ou respectivement individuellement ou par paires vers des coins (13) voisins ou opposés en diagonale du cadre (11).

8. Imprimante 3D de robot à câble selon l'une des revendications précédentes 1 à 6,
**caractérisé en ce que**
les câbles (2) ou les bandes (2) proviennent respectivement des coins (12) voisins des tambours de câble (5) d'une surface latérale délimitant l'espace de travail ou d'un bord en bas ou en haut, à partir des coins (12) diagonalement opposés à l'une des surfaces latérales délimitant l'espace de travail (7), à partir des coins (12) diagonalement opposés dans l'espace de travail (7), sont guidés respectivement individuellement ou par paires vers un coin (13) de la tête d'impression (4) et/ou respectivement individuellement ou par paires vers des coins (13) voisins ou diagonalement opposés de la tête d'impression (4).

9. Imprimante 3D de robot à câble selon la revendication 1,
**caractérisé en ce que**
le tambour à câble (5) peut pivoter autour de l'arbre à vis sans fin (15).

10. Imprimante 3D de robot à câble selon l'une des revendications précédentes 1 et 9,
**caractérisé en ce que**
l'arbre de vis sans fin (15) est guidé par un joint d'étanchéité depuis l'espace de travail (7) jusqu'à l'entraînement (8) ou est couplé ou en liaison fonctionnelle avec l'entraînement (8) au moyen d'un accouplement (17) ou **en ce que** l'entraînement (8) est disposé à l'intérieur de l'espace de travail (7) et est couplé ou en liaison fonctionnelle avec l'arbre de vis sans fin (15).

11. Imprimante 3D de robot à câble selon l'une des revendications précédentes,
**caractérisé en ce que**
la tête d'impression (4) comprend au moins un dispositif de préhension (16).
